(19) Europäisches Patentamt
European Patent Office
Office européen des brevets

(11) **EP 1 311 748 B1**

(12) **EUROPÄISCHE PATENTSCHRIFT**

(45) Veröffentlichungstag und Bekanntmachung des Hinweises auf die Patenterteilung:
**07.04.2004 Patentblatt 2004/15**

(51) Int Cl.$^7$: **F01N 11/00**, F02D 41/02

(21) Anmeldenummer: **01956352.7**

(22) Anmeldetag: **20.07.2001**

(86) Internationale Anmeldenummer:
**PCT/DE2001/002749**

(87) Internationale Veröffentlichungsnummer:
**WO 2002/014659 (21.02.2002 Gazette 2002/08)**

(54) **VERFAHREN UND MODELL ZUR MODELLIERUNG EINER AUSSPEICHERPHASE EINES STICKOXID-SPEICHERKATALYSATORS**

METHOD AND MODEL FOR MODELING AN ELIMINATION PHASE OF A NITROGEN OXIDE ACCUMULATING CATALYTIC CONVERTER

PROCEDE ET MODELE DE MODELISATION D'UNE PHASE D'EXTRACTION D'UN POT CATALYTIQUE A ACCUMULATION D'OXYDE D'AZOTE

(84) Benannte Vertragsstaaten:
**DE FR IT SE**

(30) Priorität: **14.08.2000 DE 10039708**

(43) Veröffentlichungstag der Anmeldung:
**21.05.2003 Patentblatt 2003/21**

(73) Patentinhaber: **ROBERT BOSCH GMBH
70442 Stuttgart (DE)**

(72) Erfinder:
• **SCHNAIBEL, Eberhard
71282 Hemmingen (DE)**
• **WINKLER, Klaus
71277 Rutesheim (DE)**
• **HIRSCHMANN, Klaus
71229 Leonberg (DE)**

(56) Entgegenhaltungen:
EP-A- 0 997 617          EP-A- 0 997 626
WO-A-00/34631          DE-A- 19 918 875
FR-A- 2 746 142

## Beschreibung

Stand der Technik

Die vorliegende Erfindung betrifft ein Verfahren zur Modellierung einer Ausspeicherphase eines Stickoxid (NOx)-Speicherkatalysators einer Brennkraftmaschine insbesondere eines Kraftfahrzeugs. Dabei wird der NOx-Speicherkatalysator in einen Sauerstoff (O2)-Speicher und einen Stickoxid (NOx)-Speicher unterteilt. Es wird ein den O2-Speicher und den NOx-Speicher beaufschlagender Reduktionsmittelmassenstrom ermittelt.

Die Erfindung betrifft außerdem ein Modell zur Modellierung einer Ausspeicherphase eines NOx-Speicherkatalysators einer Brennkraftmaschine insbesondere eines Kraftfahrzeugs. Das Modell umfasst eine Unterteilung des NOx-Speicherkatalysators in einen O2-Speicher und einen NOx-Speicher und einen Reduktionsmittelmassenstrom, der den O2-Speicher und den NOx-Speicher beaufschlagt.

Des weiteren betrifft die vorliegende Erfindung ein Steuergerät für eine Brennkraftmaschine mit einem NOx-Speicherkatalysator insbesondere eines Kraftfahrzeugs. Das Steuergerät umfasst ein Modell zur Modellierung einer Ausspeicherphase des NOx-Speicherkatalysators mit einer Unterteilung des NOx-Speicherkatalysators in einen O2-Speicher und einen NOx-Speicher. Außerdem umfasst das Steuergerät erste Mittel zum Ermitteln eines den O2-Speicher und den NOx-Speicher beaufschlagenden Reduktionsmittelmassenstroms.

Schließlich betrifft die Erfindung auch ein Steuerelement, insbesondere ein Read-Only-Memory, ein Random-Access-Memory oder ein Flash-Memory, für ein solches Steuergerät. Auf dem Steuerelement ist ein Programm abgespeichert, das auf einem Rechengerät, insbesondere auf einem Mikroprozessor, ablauffähig ist.

Stand der Technik

Bei Brennkraftmaschinen, die mit einem mageren Kraftstoff-Luft-Gemisch (Lambda > 1) betrieben werden können, werden NOx-Speicherkatalysatoren eingesetzt, um die von der Brennkraftmaschine während eines Magerbetriebs ausgestoßenen NOx-Emissionen einzuspeichern. Dabei befindet sich der NOx-Speicherkatalysator in der sog. Einspeicherphase. Mit zunehmender Dauer der Einspeicherphase nimmt der Wirkungsgrad des NOx-Speicherkatalysators ab, was zu einem Anstieg der NOx-Emissionen hinter dem NOx-Speicherkatalysator führt. Die Ursache für die Abnahme des Wirkungsgrads liegt in der Zunahme des Stickoxid (NOx)-Füllstands des NOx-Speicherkatalysators. Der NOx-Füllstand kann überwacht und nach Überschreiten eines vorgebbaren Schwellenwertes eine Ausspeicherphase oder Regenerierphase des NOx-Speicherkatalysators eingeleitet werden. Zum Ermitteln des NOx-Füllstands des NOx-Speicherkatalysators kann ein Stickoxid (NOx)-Einspeichermodell eingesetzt werden. NOx-Einspeichermodelle sind aus dem Stand der Technik allgemein bekannt, vgl. z.B. Patentanmeldung FR 2 746 142 A. In einem NOx-Einspeichermodell kann aus den Betriebspunkt der Brennkraftmaschine beschreibenden Parametern (z. B. der zugeführten Kraftstoffmasse oder Luftmasse, dem Drehmoment, etc.) der NOx-Füllstand modelliert werden.

Während der Ausspeicherphase wird dem Abgas der Brennkraftmaschine ein Reduktionsmittel hinzugegeben, das eingespeicherte Stickoxide zu Stickstoff (N) und Kohlendioxid (CO2) reduziert. Als Reduktionsmittel können bspw. Kohlenwasserstoff (HC), Kohlenmonoxid (CO) und/oder Wasserstoff (H2) verwendet werden, die durch eine fette Einstellung des Kraftstoff-Luft-Gemisches in dem Abgas (Homogenbetrieb der Brennkraftmaschine) erzeugt werden können. HC, CO und H2 werden auch als Fettgase bezeichnet. Alternativ kann als Reduktionsmittel auch Harnstoff zu dem Abgas hinzugegeben werden. Dabei wird zur Reduktion des Stickoxids zu Stickstoff und Kohlendioxid Ammoniak aus dem Harnstoff verwendet. Der Ammoniak kann per Hydrolyse aus einer Harnstofflösung gewonnen werden.

Gegen Ende der Ausspeicherphase ist ein Großteil des eingespeicherten Stickoxids reduziert und immer weniger des Reduktionsmittels trifft auf Stickoxid, das es zu Stickstoff und Kohlendioxid reduzieren kann. In der Folge steigt gegen Ende der Ausspeicherphase der Anteil an Reduktionsmittel in dem Abgas hinter dem NOx-Speicherkatalysator an, der Anteil an Sauerstoff in dem Abgas hinter dem NOx-Speicherkatalysator nimmt ab. Durch eine Analyse des Abgases hinter dem NOx-Speicherkatalysator durch geeignete Abgassensoren (z. B. O2-Sensor oder NOx-Sensor) kann das Ende der Ausspeicherphase dann eingeleitet werden, wenn der Großteil des Stickoxids aus dem NOx-Speicherkatalysator ausgespeichert worden ist. Des weiteren ist es bekannt, den NOx-Füllstand des NOx-Speicherkatalystors mittels eines Ausspeichermodells und damit das Ende der Ausspeicherphase modellgestützt zu bestimmen.

Das Ende der Regenerierphase muss möglichst genau bestimmt werden, da eine zu kurze Regenerierphase den NOx-Speicherkatalysator nicht vollständig leert und in Folge dessen die NOx-Emissionen ansteigt. Andererseits führt eine zu lange Regenerierphase zu einem Anstieg von Reduktionsmittel-Emissionen (Fettgase bzw. Harnstoff). Sowohl ein Anstieg der NOx-Emissionen als auch ein Anstieg der Reduktionsmittel-Emissionen ist umweltschädigend und sollte deshalb auf ein Minmum reduziert werden.

Der Einsatz von geeigneten Abgassensoren zur Analyse des Abgases hinter dem NOx-Speicherkatalysator und zum Festlegen des Endes einer Regenerierphase ist relativ aufwendig und teuer. Bei den bekannten modellgestützten Verfahren zum Bestimmen des Endes der Regenerierphase wird aus einer Zusammensetzung (Lambda) des Kraftstoff-Luft-Gemisches und einer der Brennkraftmaschine zur Verbrennung zugeführten Luftmasse ein Reduktionsmittelmassenstrom bestimmt. Dieser wird über einen temperaturabhängigen Faktor zu einem Massenstrom umgerechnet, in Abhängigkeit dessen eine Verminderung des in dem NOx-Speicherkatalysator eingespeicherten NOx während des Magerbetriebs der Brennkraftmaschine berechnet wird.

Diese Modellierung hat den Nachteil, dass sie relativ ungenau ist und zum Bestimmen des Endes einer Regenerierphase nur bedingt taugt. Das hat seine Ursache insbesondere darin, dass das Reduktionsmittel während der Regenerierphase neben dem gespeicherten NOx ebenfalls gespeicherten O2 reduziert. Welches eingespeicherte Gas - NOx oder O2 - zu einem bestimmten Zeitpunkt während der Regenerierphase dann tatsächlich reduziert wird, hängt von der Bauart des NOx-Speicherkatalysators ab. Dem aus dem Stand der Technik bekannten Ausspeichermodell kann also nicht entnommen werden, welches Gas zu welchem Zeitpunkt während der Regenerierphase um wieviel reduziert wird.

Deshalb liegt der vorliegenden Erfindung die Aufgabe zu Grunde, eine Ausspeicherphase eines NOx-Speicherkatalysators zuverlässig und genau und mit einem möglichst geringen Aufwand zu modellieren.

Zur Lösung dieser Aufgabe schlägt die Erfindung ausgehend von dem Verfahren der eingangs genannten Art vor, dass der O2-Speicher durch einen ersten Integrator für Sauerstoff (O2) und der NOx-Speicher durch einen zweiten Integrator für Stickoxide (NOx) modelliert wird und der erste Integrator und der zweite Integrator gemäß einem Aufteilungsfaktor anteilig mit dem Reduktionsmittelmassenstrom beaufschlagt werden, wobei der Aufteilungsfaktor in Abhängigkeit des O2-Speicherinhalts und des NOx-Speicherinhalts des NOx-Speicherkatalysators ermittelt wird.

Vorteile der Erfindung

Erfindungsgemäß wird also durch Einführung eines Aufteilungsfaktors der Tatsache Rechnung getragen, dass in Abhängigkeit von der Bauart des NOx-Speicherkatalysators zu verschiedenen Zeitpunkten während der Regenerierphase verschiedene eingespeicherte Gase - NOx und/oder O2 - um verschiedene Mengen reduziert werden können. Der erste Integrator für O2 und der zweite Integrator für NOx werden im Abhängigkeit von dem Anteilsfaktor anteilig mit dem Reduktionsmittelmassenstrom beaufschlagt. Dabei wird der Anteilsfaktor aus dem Zustand der jeweiligen zu reduzierenden Komponenten (O2-Speicherinhalt und NOx-Speicherinhalt, d. h. in Abhängigkeit eines ersten Integratorwertes des ersten Integrators für O2 und eines zweiten Integratorwertes des zweiten Integrators für NOx, ermittelt. Die Integratorwerte werden also sozusagen rückgekoppelt, um den Anteilsfaktor zu berechnen. Gemäß dem erfindungsgemäßen Verfahren wird der Reduktionsmittelmassenstrom auf die einzelnen zu reduzierenden Komponenten aufgeteilt, um den NOx-Speicherinhalt genau beschreiben zu können. Aufgrund der hohen Modellierungsgenauigkeit des Verfahrens wird eine bzgl. Emission und Kraftstoffverbrauch optimale Steuerung bzw. Regelung der Regenerierphase ermöglicht. Das Modellierungsverfahren der NOx-Ausspeicherung kann zur Steuerung und/oder Regelung oder zur Diagnose des Katalysators herangezogen werden. Das Verfahren kann aber auch zur Plausibilisierung oder Korrektur von Sensorsignalen, bspw. der Signale von Abgassensoren, die zur Analyse des hinter dem NOx-Speicherkatalysator austretenden Abgases und zum Bestimmen des Endes der Regenerierphase dienen, eingesetzt werden.

Der Reduktionsmittelmassenstrom kann auf beliebige Weise ermittelt werden. Er kann bspw. mittels eines geeigneten Sensors gemessen werden. Gemäß einer vorteilhaften Weiterbildung der vorliegenden Erfindung wird jedoch vorgeschlagen, dass der Reduktionsmittelmassenstrom aus einer Zusammensetzung des Kraftstoff-Luft-Gemisches und eines der Brennkraftmaschine zur Verbrennung zugeführten Luftmassenstroms ermittelt wird.

Gemäß einer bevorzugten Ausführungsform der vorliegenden Erfindung wird vorgeschlagen, dass ein Abgasmassenstrom der Brennkraftmaschine aus dem der Brennkraftmaschine zur Verbrennung zugeführten Luftmassenstrom ermittelt und der Reduktinosmittelmassenstrom aus der Zusammensetzung des Kraftstoff-Luft-Gemisches und dem Abgasmassenstrom ermittelt wird. Aus dem Abgasmassenstrom kann dann durch Multiplikation mit (1.0/Lambda - 1.0) der gesamte Reduktionsmittelmassenstrom ermittelt werden.

Gemäß einer anderen vorteilhaften Weiterbildung der Erfindung wird vorgeschlagen, dass ein Wirkungsgrad eingeführt wird, mit dem der aus der Zusammensetzung des ermittelte Reduktionsmittelmassenstrom gewichtet wird. Der ermittelte gesamte Reduktionsmittelmassenstrom wird mit dem Wirkungsgrad beaufschlagt und ergibt den effektiven Reduktionsmittelmassenstrom, der tatsächlich an der Umsetzung der gespeicherten Komponenten (NOx, O2) beteiligt ist. Der Reduktionsmittelschlupf, d. h. der Anteil des Reduktionsmittels, das in dem NOx-Speicherkatalysator nicht auf NOx oderO2 trifft und hinten aus dem Katalysator wieder ausgeschieden wird, wird durch die Einführung des Wirkungsgrades erfaßt und erhöht die Genauigkeit des erfindungsgemäßen Modellierungsverfahrens. Der Wirkungsgrad wird vorteilhafterweise mittels einer Kennlinie oder eines Kennfeldes in Abhängigkeit des Abgasmassenstroms ermittelt.

Gemäß einer anderen bevorzugten Ausführungsform der vorliegenden Erfindung wird vorgeschlagen, dass bei der Ermittlung des O2-Speicherinhalts des O2-Speichers die Temperatur in dem NOx-Speicherkatalysator berücksichtigt wird. Das erfindungsgemäße Verfahren gemäß dieser Ausführungsform ermöglicht eine bzgl. Emission und Kraftstoffverbrauch optimale Steuerung bzw. Regelung der Regenerierphase, da der temperaturabhängige Anteil an Reduktionsmittel, der für die Entleerung des O2-Speichers benötigt wird, berücksichtigt wird.

Als eine weitere Lösung der Aufgabe der vorliegenden Erfindung wird ausgehend von dem Modell der eingangs genannten Art vorgeschlagen, dass das Modell einen ersten Integrator für Sauerstoff (O2) als O2-Speicher und einen zweiten Integrator für Stickoxide (NOx) als NOx-Speicher aufweist und das Modell außerdem einen von dem O2-Speicherinhalt und dem NOx-Speicherinhalt des NOx-Speicherkatalysators abhängigen Aufteilungsfaktor aufweist, wobei der erste Integrator und der zweite Integrator gemäß dem Aufteilungsfaktor anteilig mit dem Reduktionsmittelmassenstrom beaufschlagbar sind.

Schließlich wird zur Lösung der Aufgabe der vorliegenden Erfindung ausgehend von dem Steuergerät der eingangs genannten Art vorgeschlagen, dass das Steuergerät einen ersten Integrator für Sauerstoff (O2) als O2-Speicher und einen zweiten Integrator für Stickoxide (NOx) als NOx-Speicher aufweist und das Steuergerät außerdem zweite Mittel zum Ermitteln eines Aufteilungsfaktors in Abhängigkeit des O2-Speicherinhalts und des NOx-Speicherinhalts des NOx-Speicherkatalysators aufweist, wobei der erste Integrator und der zweite Integrator gemäß dem Aufteilungsfaktor anteilig mit dem Reduktionsmittelmassenstrom beaufschlagbar sind.

Von besonderer Bedeutung ist die Realisierung des erfindungsgemäßen Verfahrens in Form eines Steuerelements, das für ein Steuergerät einer Brennkraftmaschine insbesondere eines Kraftfahrzeugs vorgesehen ist. Dabei ist auf dem Steuerelement ein Programm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektronisches Speichermedium zur Anwendung kommen, bspw. ein Read-Only-Memory, ein Random-Access-Memory oder ein Flash-Memory.

Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:

Figur 1 ein schematisches Blockschaltbild einer erfindungsgemäßen Brennkraftmaschine gemäß einer bevorzugten Ausführungsform;

Figur 2 einen ersten Ausschnitt eines schematischen Aufbaus eines erfindungsgemäßen Modells gemäß einer bevorzugten Ausführungsform; und

Figur 3 einen zweiten Ausschnitt eines schematischen Aufbaus des erfindungsgemäßen Modells gemäß einer bevorzugten Ausführungsform.

Beschreibung der Ausführungsbeispiele

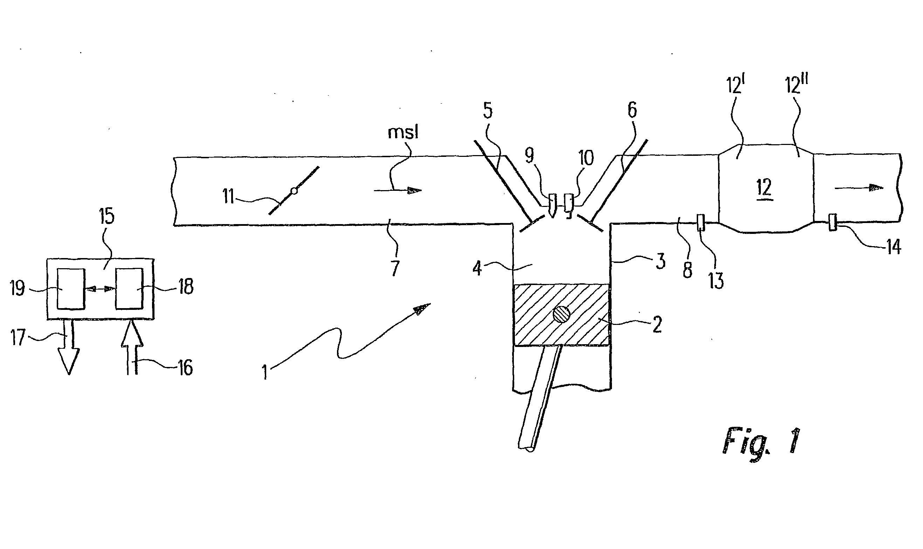

In Figur 1 ist eine direkteinspritzende Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der u.a. durch den Kolben 2, ein Einlassventil 5 und ein Auslassventil 6 begrenzt ist. Mit dem Einlassventil 5 ist ein Ansaugrohr 7 und mit dem Auslassventil 6 ein Abgasrohr 8 gekoppelt.

Im Bereich des Einlassventils 5 und des Auslassventils 6 ragen ein Kraftstoffeinspritzventil 9 und eine Zündkerze 10 in dem Brennraum 4. Über das Einspritzventil 9 kann Kraftstoff in dem Brennraum 4 eingespritzt werden. Mit der Zündkerze 10 kann der Kraftstoff in dem Brennraum 4 entzündet werden.

In dem Ansaugrohr 7 ist eine drehbare Drosselklappe 11 untergebracht, über die dem Ansaugrohr 7 Luft zuführbar ist. Der zugeführte Luftmassenstrom msl ist abhängig von der Winkelstellung der Drosselklappe 11. Der Luftmassenstrom msl kann mit Hilfe eines Luftmassensensors (nicht dargestellt) oder anhand der Stellung der Drosselklappe 11 bestimmt werden. In dem Abgasrohr 8 ist ein Katalysator 12 untergebracht, der die durch die Verbrennung des Kraftstoffs entstehenden Abgase reinigt. Bei dem Katalysator 12 handelt es sich um einen Stickoxid (NOx)-Speicherkatalysator 12', der mit einem 3-Wege-Katalysator 12'' als Sauerstoffspeicher gekoppelt ist. Alternativ kann der Katalysator 12 jedoch auch nur einen NOx-Speicherkatalysator 12' umfassen.

Ein Steuergerät 15 ist von Eingangssignalen 16 beaufschlagt, die mittels Sensoren gemessene Betriebsgrößen der Brennkraftmaschine 1 darstellen. Das Steuergerät 15 erzeugt Ausgangssignale 17, mit denen über Aktoren bzw. Steller das Verhalten der Brennkraftmaschine 1 beeinflusst werden kann. Unter anderem ist das Steuergerät 15 dazu vorgesehen, die Betriebsgrößen der Brennkraftmaschine 1 zu steuern und/oder zu regeln. Zu diesem Zweck ist das Steuergerät 15 mit einem Mikroprozessor 18 versehen, der in einem Steuerelement 19 ein Programm abgespeichert hat, das dazu geeignet ist, die genannte Steuerung und/oder Regelung durchzuführen. Das Steuerelement 19 ist vorzugsweise als ein elektronisches Speichermedium, insbesondere als ein Flash-Memory, ausgebildet.

In einer ersten Betriebsart, einem sogenannten Homogenbetrieb der Brennkraftmaschine 1, wird die Drosselklappe 11 in Abhängigkeit von dem erwünschten Drehmoment teilweise geöffnet bzw. geschlossen. Der Kraftstoff wird von dem Einspritzventil 9 während einer durch den Kolben 2 hervorgerufenen Ansaugphase in den Brennraum 4 eingespritzt. Durch die gleichzeitig über die Drosselklappe 11 angesaugte Luft wird der eingespritzte Kraftstoff verwirbelt und damit in dem Brennraum 4 im Wesentlichen gleichmäßig verteilt. Danach wird das Kraftstoff-Luft-Gemisch während der Verdichtungsphase verdichtet, um dann von der Zündkerze 10 entzündet zu werden. Durch die Ausdehnung des entzündeten Kraftstoffs wird der Kolben 2 angetrieben. Das entstehende Drehmoment hängt im Homogenbetrieb u. a. von der Stellung der Drosselklappe 11 ab. Im Hinblick auf eine geringe Schadstofentwicklung wird das Kraftstoff-Luft-Gemisch möglichst auf Lambda = 1 eingestellt.

In einer zweiten Betriebsart, einem sogenannten Schichtbetrieb der Brennkraftmaschine 1, wird die Drosselklappe 11 weit geöffnet, d. h. dem Brennraum 4 wird ein großer Luftmassenstrom msl zur Verbrennung zugeführt. Der Kraftstoff wird von dem Einspritzventil 9 während einer durch den Kolben 2 hervorgerufenen Verdichtungsphase in den Brennraum 4 eingespritzt, und zwar örtlich in die unmittelbare Umgebung der Zündkerze 10 sowie zeitlich in geeignetem Abstand vor dem Zündzeitpunkt. Dann wir mit Hilfe der Zündkerze 10 der Kraftstoff entzündet, so dass der Kolben 2 in der nunmehr folgenden Arbeitsphase durch die Ausdehnung des entzündeten Kraftstoffs angetrieben wird. Das entstehende Drehmoment hängt im Schichtbetrieb weitgehend von der eingespritzten Kraftstoffmasse ab. Im Wesentlichen ist der Schichtbetrieb für den Leerlaufbetrieb und den Teillastbetrieb der Brennkraftmaschine 1 vorgesehen. Im Schichtbetrieb ist Lambda üblicherweise > 1.

Während einer Einspeicherphase des NOx-Speicherkatalysators 12' wird die Brennkraftmaschine 1 im Schichtbetrieb betrieben, und der Speicherkatalysator 12' wird mit Stickoxiden und mit Sauerstoff beladen. In einer Regenerierphase oder Ausspeicherphase wird der NOx-Speicherkatalysator 12' wieder entladen, so dass er in einem nachfolgenden Schichtbetrieb erneut Stickoxide (NOx) bzw. Sauerstoff (O2) aufnehmen kann. Während der Regenerierphase wird vor dem Katalysator 12 ein Reduktionsmittel in das Abgas gegeben. Als Reduktionsmittel können bspw. Kohlenwasserstoffe (HC), Kohlenmonoxid (CO) oder Harnstoff verwendet werden. Kohlenwasserstoffe und Kohlenmonoxid werden im Abgas durch eine fette Gemischeinstellung (Betrieb der Brennkraftmaschine im Homogenbetrieb) erzeugt. Harnstoff kann aus einem Vorratsbehälter dem Abgas gesteuert zudosiert werden.

Während der Regenerierphase des Katalysators 12 laufen folgende Prozesse ab: Das Reduktionsmittel reduziert die gespeicherten Stickoxide zu Stickstoff (N) und Kohlendioxid (CO2). Diese Stoffe treten aus dem Katalysator 12 heraus, so dass sich hinter dem Katalysator 12 während der Regenerierphase ein Sauerstoffüberschuss ergibt, obwohl die Brennkraftmaschine 1 mit einem fetten Kraftstoff-Luft-Gemisch (Sauerstoffmangel) betrieben wird.

Vor dem Katalysator 12 ist ein Sauerstoff (O2)-Sensor 13 und nach dem Katalysator 12 ein Stickstoff (NOx)-Sensor 14 in dem Abgasrohr 8 angeordnet. Nach dem Umschalten auf Sauerstoffmangel (Betrieb der Brennkraftmaschine 1 mit fettem Gemisch) vor dem Katalysator 12 zu Beginn der Regenerierphase reagiert der O2-Sensor 13 praktisch verzögerungslos. Aufgrund des während des Schichtbetriebs (mageres Kraftstoff-Luft-Gemisch) vorherrschenden Sauerstoffüberschusses in dem Abgas sind die Sauerstoffspeicherplätze des Katalysators 12 zunächst nahezu alle besetzt. Nach dem Umschalten auf Sauerstoffmangel (fettes Kraftstoff-Luft-Gemisch) zu Beginn der Regenerierphase werden die Sauerstoffspeicherplätze sukzessive von Sauerstoff befreit, der dann aus dem Katalysator 12 heraustritt. Hinter dem Katalysator 12 herrscht daher nach dem Umschalten in die Regenerierphase zunächst weiter Sauerstoffüberschuss. Nach einer von der Speicherfähigkeit des NOx-Speicherkatalysators 12' abhängigen Zeitspanne ist das gesamte in dem Speicherkatalysator 12' eingespeicherte Stickoxid (N) reduziert und der gesamte eingespeicherte Sauerstoff (O) entfernt, so dass auch hinter dem Katalysator 12 Sauerstoffmangel auftritt. Durch eine Analyse des Abgases hinter dem NOx-Speicherkatalysator 12' durch geeignete Abgassensoren kann das Ende der Regenerierphase dann eingeleitet werden, wenn der Großteil des Stickoxids (N) aus dem NOx-Speicherkatalysator 12' ausgespeichert worden ist.

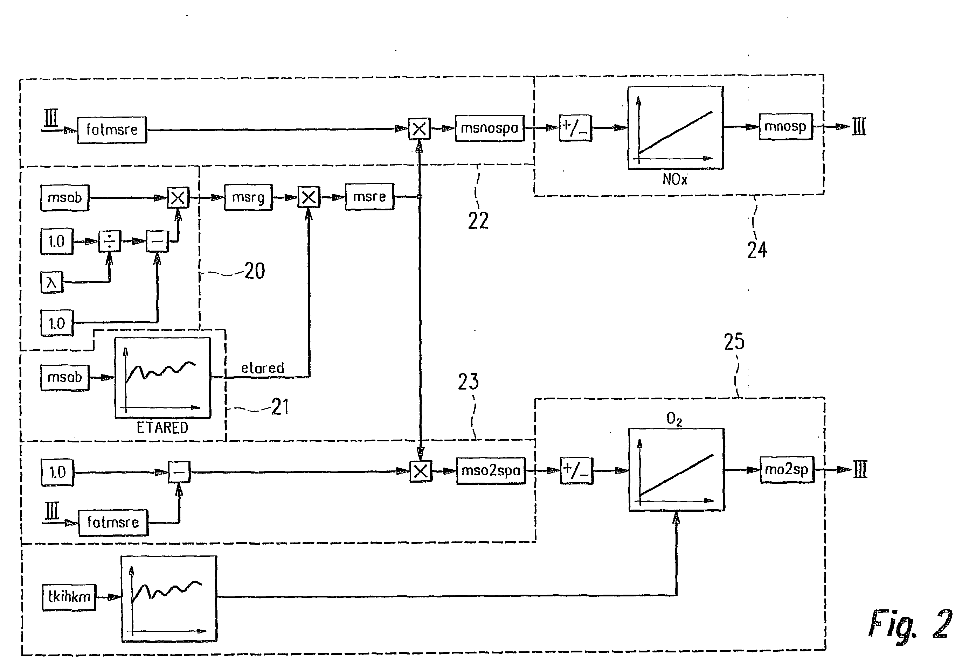

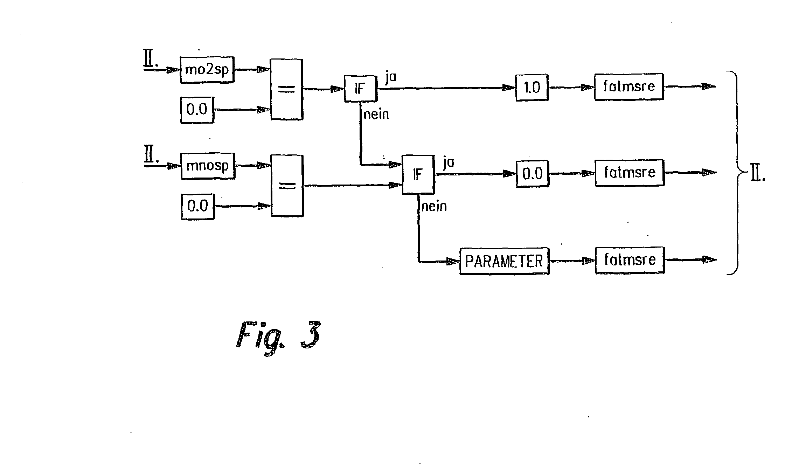

Erfindungsgemäß wird ein in den Figuren 2 und 3 dargestelltes Ausspeichermodell vorgeschlagen, durch das die Regenerierphase des NOx-Speicherkatalysators 12' besonders zuverlässig und genau modelliert werden kann. Zur Modellierung der Ausspeicherphase ist ein Modellierungsverfahren bspw. in dem Steuergerät 15 der Brennkraftmaschine 1 implementiert. Zu diesem Zweck ist in dem Steuerelement 19 ein Programm abgespeichert, das auf dem Mikroprozessor 18 ablauffähig und dazu geeignet ist, das erfindungsgemäße Modellierungsverfahren durchzuführen.

Das Ergebnis der Modellierung kann bspw. zur Steuerung und/oder Regelung oder zur Diagnose (Erkennen von Alterung oder Vergiftung) des Katalysators 12 herangezogen werden. Es kann aber auch zur Plausibilisierung oder Korrektur von Sensorsignalen, bspw. der Signale des NOx-Sensors 14, die zum Bestimmen des Endes der Regenerierphase dienen, eingesetzt werden.

Das erfindungsgemäße Ausspeichermodell ist in den Figuren 2 und 3 dargestellt und wird im Folgenden anhand dieser Figuren näher erläutert. In einem ersten Funktionsblock 20 wird der gesamte Reduktionsmittelmassenstrom msrg ermittelt, der dem NOx-Speicherkatalysator 12' während der Regeneriersphase zugeführt wird. Der gesamte Reduktionsmittelmassenstrom msrg ergibt sich aus der Gleichung:

$$msrg = msab \cdot (1.0/lambda - 1.0),$$

mit dem Abgasmassenstrom msab und der Zusammensetzung lambda des Kraftstoff-Luft-Gemisches.

Der Abgasmassenstrom msab wird aus dem der Brennkraftmaschine 1 zur Verbrennung zugeführten Luftmassenstrom msl ermittelt. Der Abgasmassenstrom msab ist der zeitverzögerte und - da stark temperaturabhängig-dichtekorrigierte Luftmassenstrom msl.

In einem Funktionsblock 21 wird ein Wirkungsgrad etared bestimmt, der im weiteren Verlauf mit dem gesamten Reduktionsmittelstrom msrg zu dem effektiven Reduktionsmittelstrom msre multipliziert wird, der tatsächlich an der Umsetzung der gespeicherten Komponenten (NOx, O2) beteiligt ist. Über den Wirkungsgrad etared kann der Tatsache Rechnung getragen werden, dass nicht der gesamte Reduktionsmittelmassenstrom msrg während der Regenerierphase in dem NOx-Speicherkatalysator 12' auf zu reduzierendes NOx oder zu reduzierenden O2 trifft, sondern ein Teil des gesamten Reduktionsmittelmassenstroms msrg den Katalysator 12 ohne Reaktion mit NOx oder O2 wieder verlässt. Der Wirkungsgrad etared wird aus dem Abgasmassenstrom msab mittels einer applizierten Kennlinie ETARED ermittelt. Die Kennlinie ETARED kann im Vorfeld der Modellierung empirisch ermittelt werden.

Der effektive Reduktionsmittelmassenstrom msre wird in einem Funktionsblock 22 mit einem Aufteilungsfaktor fatmsre zu einem Anteil msnospa des effektiven Reduktionsmittelmassenstroms multipliziert, der in dem Katalysator 12 mit NOx reagiert. Ebenso wird der effektive Reduktionsmittelmassenstrom msre in einem Funktionsblock 23 mit einer Differenz aus 1.0 und dem Aufteilungsfaktor fatmsre zu einem Anteil mso2spa des effektiven Reduktionsmittelmassenstroms multipliziert, der in dem Katalysator 12 mit O2 reagiert. Über den Aufteilungsfaktor fatmsre wird der effektive Reduktionsmittelmassenstrom also auf den NOx-Speicher und den O2-Speicher aufgeteilt. Der Aufteilungsfaktor fatmsre ist abhängig von dem Füllstand des NOx- bzw. des O2-Speichers. Der Aufteilungsfaktor fatmsre stellt einen wesentlichen Teil des erfindungsgemäßen Modells dar. Die Ermittlung des Aufteilungsfaktors fatmsre ist in Figur 3 dargestellt und wird weiter unten näher erläutert.

Der NOx-Speicher und der O2-Speicher sind bei dem erfindungsgemäßen Ausspeichermodell jeweils durch einen eigenen Integrator repräsentiert. In einem Funktionsblock 24 wird der Anteil msnospa des effektiven Reduktionsmittelmassenstroms einem NOx-Integrator zugeführt, um den NOx-Speicherinhalt mnosp zu bestimmen. Ebenso wird der Anteil mso2spa des effektiven Reduktionsmittelmassenstroms in einem Funktionsblock 25 einem O2-Integrator zugeführt, um den O2-Speicherinhalt mo2sp zu bestimmen. Da die O2-Speicherfähigkeit des Katalysators 12 stark temperaturabhängig ist, wird bei der Berechnung des O2-Speicherinhalts noch die Temperatur tkihkm hinter dem Katalysator 12 berücksichtigt.

Der NOx-Speicherinhalt mnosp und der O2-Speicherinhalt mo2sp werden zur Ermittlung des Aufteilungsfaktors fatmsre in Figur 3 herangezogen. Falls der O2-Speicherinhalt mO2sp gleich Null (0.0) ist, d. h. falls der 02-Speicher bereits vollständig geleert ist, wird der Aufteilungsfaktor fatmsre gleich Eins (1.0) gewählt. Der in Figur 3 ermittelte Aufteilungsfaktor fatmsre wird dann in Figur 2 den Funktionsblöcken 22 und 23 zugeführt. Das bedeutet, dass der gesamte effektive Reduktionsmittelstrom msre über den Funktionsblock 22 in den Funktionsblock 24 zu dem NOx-Speicher gelangt und dort an der Reduktion des NOx beteiligt ist.

Falls in Figur. 3 der O2-Speicherinhalt mo2sp nicht gleich Null (0.0) ist, wird überprüft, ob der NOx-Speicherinhalt mnosp gleich Null (0.0) ist, d. h. ob der NOx-Speicher bereits vollständig geleert ist. Falls ja, wird der Aufteilungsfaktor fatmsre gleich Null (0.0) gewählt. Das bedeutet, dass in Figur 2 der gesamte effektive Reduktionsmittelstrom msre über den Funktionsblock 23 in den Funktionsblock 25 zu dem O2-Speicher gelangt und dort an dem Abbau des O2 beteiligt ist.

Falls in Figur 3 der NOx-Speicherinhalt mnosp nicht gleich Null (0.0) ist, wird der Aufteilungsfaktor fatmsre gleich einem beliebigen PARAMETER zwischen Null und Eins gewählt. Der PARAMETER kann im Vorfeld der Modellierung durch Simulation oder während des Betriebs der Brennkraftmaschine 1 empirisch ermittelt werden. Der PARAMETER kann abhängig vom Füllstand des NOx- bzw. des O2-Speichers variieren. Er kann sich linear mit dem Füllstand oder in beliebig anderer Weise mit dem Füllstand ändern.

**Patentansprüche**

1. Verfahren zur Modellierung einer Ausspeicherphase eines Stickoxid (NOx)-Speicherkatalysators (12') einer Brennkraftmaschine (1) insbesondere eines Kraftfahrzeugs, wobei der NOx-Speicherkatalysator (12') in einen Sauerstoff (O2)-Speicher und einen Stickoxid (NOx)-Speicher unterteilt und ein den O2-Speicher und den NOx-Speicher beaufschlagender Reduktionsmittelmassenstrom (msrg) ermittelt wird, **dadurch gekennzeichnet, dass** der O2-Speicher durch einen ersten Integrator für Sauerstoff (O2) und der NOx-Speicher durch einen zweiten Integrator für Stickoxide (NOx) modelliert wird und der erste Integrator und der zweite Integrator gemäß einem Aufteilungsfaktor (fatmsre) anteilig mit dem Reduktionsmittelmassenstrom (msrg) beaufschlagt werden, wobei der Aufteilungsfaktor (fatmsre) in Abhängigkeit des O2-Speicherinhalts (mo2sp) und des NOx-Speicherinhalts (mnosp) des NOx-Speicherkatalysators (12') ermittelt wird.

2. Verfahren nach Anspruch 1, **dadurch gekennzeichnet, dass** der Reduktionsmittelmassenstrom (msrg) aus einer Zusammensetzung (lambda) des Kraftstoff-Luft-Gemisches und eines der Brennkraftmaschine (1) zur Verbrennung zugeführten Luftmassenstroms (msl) ermittelt wird.

3. Verfahren nach Anspruch 2, **dadurch gekennzeichnet, dass** ein Abgasmassenstrom (msab) der Brennkraftmaschine (1) aus dem der Brennkraftmaschine (1) zur Verbrennung zugeführten Luftmassenstrom (msl) ermittelt und der Reduktinosmittelmassenstrom (msrg) aus der Zusammensetzung (lambda) des Kraftstoff-Luft-Gemisches und dem Abgasmassenstrom (msab) ermittelt wird.

4. Verfahren nach Anspruch 2 oder 3, **dadurch gekennzeichnet, dass** ein Wirkungsgrad (etared) eingeführt wird, mit dem der aus der Zusammensetzung (lambda) des ermittelte Reduktionsmittelmassenstrom (msrg) gewichtet wird.

5. Verfahren nach Anspruch 4, **dadurch gekennzeichnet, . dass** der Wirkungsgrad (etared) mittels einer Kennlinie (ETARED) oder eines Kennfeldes in Abhängigkeit des Abgasmassenstroms (msab) ermittelt wird.

6. Verfahren nach einem der Ansprüche 1 bis 5, **dadurch gekennzeichnet, dass** bei der Ermittlung des O2-Speicherinhalts des O2-Speichers die Temperatur (tkihkm) in dem NOx-Speicherkatalysator (12') berücksichtigt wird.

7. Modell zur Modellierung einer Ausspeicherphase eines Stickoxid (NOx)-Speicherkatalysators einer Brennkraftmaschine insbesondere eines Kraftfahrzeugs, wobei das Modell eine Unterteilung des NOx-Speicherkatalysators (12') in einen Sauerstoff (O2)-Speicher und einen Stickoxid (NOx)-Speicher und einen Reduktionsmittelmassenstrom (msrg) umfasst, der den O2-Speicher und den NOx-Speicher beaufschlagt, **dadurch gekennzeichnet, dass** das Modell einen ersten Integrator für Sauerstoff (O2) als O2-Speicher und einen zweiten Integrator für Stickoxide (NOx) als NOx-Speicher aufweist und das Modell außerdem einen von dem 02-Speicherinhalt (mo2sp) und dem NOx-Speicherinhalt (mnosp) des NOx-Speicherkatalysators (12') abhängigen Aufteilungsfaktor (fatmsre) aufweist, wobei der erste Integrator und der zweite Integrator gemäß dem Aufteilungsfaktor (fatmsre) anteilig mit dem Reduktionsmittelmassenstrom (msrg) beaufschlagbar sind.

8. Steuergerät (15) für eine Brennkraftmaschine (1) mit einem Stickoxid (NOx)-Speicherkatalysator (12') insbesondere eines Kraftfahrzeugs, wobei das Steuergerät (15) ein Modell zur Modellierung einer Ausspeicherphase des NOx-Speicherkatalysators (12') mit einer Unterteilung des NOx-Speicherkatalysators (12') in einen Sauerstoff (O2)-Speicher und einen Stickoxid (NOx)-Speicher und erste Mittel zum Ermitteln eines den O2-Speicher und den NOx-Speicher beaufschlagenden Reduktionsmittelmassenstroms (msrg) umfasst, **dadurch gekennzeichnet, dass** das Steuergerät (15) einen ersten Integrator für Sauerstoff (O2) als O2-Speicher und einen zweiten Integrator für Stickoxide (NOx) als NOx-Speicher aufweist und das Steuergerät (15) außerdem zweite Mittel zum Ermitteln eines Aufteilungsfaktors (fatmsre) in Abhängigkeit des O2-Speicherinhalts (mo2sp) und des NOx-Speicherinhalts (mnosp) des NOx-Speicherkatalysators (12') aufweist, wobei der erste Integrator und der zweite Integrator gemäß dem Aufteilungsfaktor (fatmsre) anteilig mit dem Reduktionsmittelmassenstrom (msrg) beaufschlagbar sind.

9. Steuerelement (19), insbesondere Read-Only-Memory, Random-Access-Memory oder Flash-Memory, für ein Steuergerät (15) einer Brennkraftmaschine (1) insbesondere eines Kraftfahrzeugs, auf dem ein Programm abgespeichert ist, das auf einem Rechengerät, insbesondere auf einem Mikroprozessor (18), ablauffähig und zur Ausführung eines Verfahrens nach einem der Ansprüche 1 bis 6 geeignet ist.

**Claims**

1. Method for modelling an elimination phase of a nitrogen oxide (NOx) accumulating catalytic converter (12') of an internal combustion engine (1), in particular of a motor vehicle, the NOx accumulating catalytic converter (12') being subdivided into an oxygen (02) accumulator and a nitrogen oxide (NOx) accumulator, and a reduction agent mass flow (msrg) that acts on the O2 accumulator and the NOx accumulator being determined, **characterized in that** the O2 accumulator is modelled by means of a first integrator for oxygen (O2) and the NOx accumulator is modelled by means of a second integrator for nitrogen oxides (NOx) , and the first integrator and the second integrator are acted on proportionally with the reduction agent mass flow (msrg) in accordance with a distribution factor (fatmsre), the distribution factor (fatmsre) being determined as a function of the O2 accumulator content (mo2sp) and of the NOx accumulator content (mnosp) of the NOx accumulating catalytic converter (12').

2. Method according to Claim 1, **characterized in that** the reduction agent mass flow (msrg) is determined from a composition (lambda) of the fuel-air mixture and an air mass flow (msl) supplied to the internal combustion engine (1) for combustion.

3. Method according to Claim 2, **characterized in that** an exhaust gas mass flow (msab) from the internal combustion engine (1) is determined from the air mass flow (msl) supplied to the internal combustion engine (1) for combustion, and the reduction agent mass flow (msrg) is determined from the composition (lambda) of the fuel-air mixture and the exhaust gas mass flow (msab).

4. Method according to Claim 2 or 3, **characterized in that** an efficiency (etared) is introduced, with which the reduction agent mass flow (msrg) determined from the composition (lambda) is weighted.

5. Method according to Claim 4, **characterized in that** the efficiency (etared) is determined by means of a characteristic curve (ETARED) or of a characteristic map as a function of the exhaust gas mass flow (msab).

6. Method according to one of Claims 1 to 5, **characterized in that**, during the determination of the O2 accumulator content of the O2 accumulator, the temperature (tkihkm) in the NOx accumulating catalytic converter (12') is taken into account.

7. Model for modelling an elimination phase of a nitrogen oxide (NOx) accumulating catalytic converter of an internal combustion engine, in particular of a motor vehicle, the model comprising a subdivision of the NOx accumulating catalytic converter (12') into an oxygen (O2) accumulator and a nitrogen oxide (NOx) accumulator and a reduction agent mass flow (msrg), which acts on the O2 accumulator and the NOx accumulator, **characterized in that** the model has a first integrator for oxygen (O2) as O2 accumulator and a second integrator for nitrogen oxides (NOx) as NOx accumulator, and the model additionally has a distribution factor (fatmsre) that depends on the O2 accumulator content (mo2sp) and the NOx accumulator content (mnosp) of the NOx accumulating catalytic converter (12'), it being possible for the first integrator and the second integrator to be acted on proportionally with the reduction agent mass flow (msrg) in accordance with the distribution factor (fatmsre).

8. Controller (15) for an internal combustion engine (1) having a nitrogen oxide (NOx) accumulating catalytic converter (12'), in particular of a motor vehicle, the controller (15) comprising a model for modelling an elimination phase of the NOx accumulating catalytic converter (12') with a subdivision of the NOx accumulating catalytic converter (12') into an oxygen (O2) accumulator and a nitrogen oxide (NOx) accumulator and first means for determining a reduction agent mass flow (msrg) that acts on the O2 accumulator and the NOx accumulator, **characterized in that** the controller (15) has a first integrator for oxygen (O2) as O2 accumulator and a second integrator for nitrogen oxides (NOx) as NOx accumulator, and the controller (15) additionally has second means for determining a distribution factor (fatmsre) that depends on the O2 accumulator content (mo2sp) and the NOx accumulator content (mnosp) of the NOx accumulating catalytic converter (12'), it being possible for the first integrator and the second integrator to be acted on proportionally with the reduction agent mass flow (msrg) in accordance with the distribution factor (fatmsre).

9. Control element (19), in particular read-only memory, random-access memory or flash memory, for a controller (15) of an internal combustion engine (1), in particular of a motor vehicle, on which there is stored a program which is capable of running on a computing device, in particular on a microprocessor (18), and is suitable for implementing a method according to one of Claims 1 to 6.

**Revendications**

1. Procédé de modélisation d'une phase d'extraction d'un oxyde d'un pot catalytique (12') d'accumulation d'oxydes d'azote (NOx) d'un moteur à combustion interne (1), d'un véhicule automobile notamment, selon lequel ce pot catalytique (12') est divisé en un accumulateur d'oxygène (O2) et un accumulateur d'oxydes d'azote (NOx) et un débit massique (msrg) d'agent réducteur agissant sur les accumulateurs d'oxygène O2 et d'oxydes d'azote (NOx) est déterminé,
   **caractérisé en ce que**
   l'accumulateur d'oxygène est modélisé par un premier intégrateur d'oxygène (O2) et l'accumulateur d'oxydes d'azote est modélisé par un second intégrateur d'oxydes d'azote (NOx), ce deux intégrateurs étant soumis à l'action du débit d'agent réducteur (msrg) selon un facteur de répartition (fatmsre) qui est établi en fonction du dépôt accumulé d'oxygène O2 (mo2sp) et du de dépôt accumulé d'oxydes d'azote NOx retenus dans le pot catalytique (12').

2. Procédé selon la revendication 1,
**caractérisé en ce que**
le débit d'agent réducteur (msrg) est établi à partir de la composition (lambda) du mélange air-carburant et d'un débit massique d'air (msl) amené au moteur (1) pour la combustion.

3. Procédé selon la revendication 2,
**caractérisé en ce qu'**
un débit de gaz d'échappement (msab) du moteur (1) est établi à partir du débit massique d'air (msl) amené au moteur (1) pour la combustion et le débit d'agent réducteur (msrg) est établi à partir de la composition (lambda) de mélange air-carburant et du débit massique de gaz d'échappement (msab).

4. Procédé selon la revendication 2 ou 3,
**caractérisé en ce qu'**
un rendement (etared) est introduit et le débit massique d'agent réducteur (msrg) établi à partir de la composition (lambda) est pondéré en utilisant ce rendement.

5. Procédé selon la revendication 4,
**caractérisé en ce que**
le rendement (etared) est établi au moyen d'une ligne caractéristique (ETARED) ou d'un champ de caractéristiques en fonction du débit massique de gaz d'échappement (msab).

6. Procédé selon l'une des revendications 1 à 5,
**caractérisé en ce que**
l'établissement du dépôt accumulé en oxygène de l'accumulateur d'oxygène tient compte de la température (tkihkm) régnant dans le pot catalytique d'accumulation d'oxydes d'azote (12').

7. Modèle pour modéliser une phase d'extraction d'un pot catalytique (12') d'accumulation d'oxydes d'azote (NOx) d'un moteur à combustion interne, d'un véhicule automobile notamment, modèle qui comporte une division du pot catalytique (12') en un accumulateur d'oxygène (O2) et un accumulateur d'oxydes d'azote (NOx), ainsi qu'un débit massique d'agent réducteur (msrg) agissant sur les accumulateurs d'oxygène et d'oxydes d'azote,
**caractérisé en ce que**
ce modèle présente un premier intégrateur pour l'oxygène (O2) et un second intégrateur pour les oxydes d'azote (NOx), ainsi qu'un facteur de répartition (fatmsre) dépendant du dépôt accumulé d'oxygène (mo2sp) et du dépôt accumulé de NOx (mnosp) dans le pot catalytique (12') de rétention de NOx, le premier et le second intégrateur pouvant être soumis à l'action du débit massique d'agent réducteur (msrg) selon le facteur de répartition (fatmsre).

8. Appareil de commande (15) pour un moteur à combustion interne (1) équipé d'un pot catalytique d'accumulateur de (NOx) (12'), d'un véhicule automobile notamment, cet appareil (15) comportant un modèle pour modéliser une phase d'extraction du pot catalytique d'accumulateur de NOx (12') divisé en un accumulateur d'oxygène (O2) et un accumulateur d'oxydes d'azote (NOx), ainsi que des premiers moyens pour déterminer un débit massique d'agent réducteur (msrg), agissant sur les accumulateurs d'oxygène et d'oxydes d'azote,
**caractérisé en ce que**
l'appareil de commande (15) comprend un premier intégrateur pour l'oxygène en tant qu'accumulateur d'oxygène et un second intégrateur pour des oxydes d'azote (NOx) en tant qu'accumulateur d'oxydes d'azote, ainsi que des seconds moyens pour déterminer un facteur de répartition (fatmsre) en fonction du dépôt accumulé d'oxygène (mo2sp) et du dépôt accumulé de NOx (mnosp) du pot catalytique (12') d'acumulation de NOx, le premier et le second intégrateur étant soumis à l'action du débit massique d'agent réducteur selon le facteur de répartition (fatmsre).

9. Elément de commande (19), notamment ROM (read only memory), RAM (random access memory) ou Flash memory, pour un appareil de commande (15) d'un moteur à combustion interne (1) d'un véhicule automobile notamment, dans lequel est enregistré un programme qui peut être exploité dans un calculateur, notamment un microprocesseur, adapté à la mise en oeuvre d'un procédé selon l'une des revendication 1 à 6.

EP 1 311 748 B1

*Fig. 1*

Fig. 2

Fig. 3